# EUROPÄISCHE PATENTANMELDUNG

(11) **EP 4 553 020 A1**
(43) Veröffentlichungstag der Anmeldung: **14.05.2025**
(21) Anmeldenummer: 23208486.3
(22) Anmeldetag: 08.11.2023
(51) Int. Cl.: B65G 61/00, B65G 57/03

(54) **VERFAHREN ZUM ÜBERFÜHREN VON STAPELN FLÄCHIGER PRODUKTE VON EINER IN IHRER HÖHE EINSTELLBAREN FÖRDERSTRECKE ZU EINER PALETTE**

(71) Anmelder: Heidelberger Druckmaschinen AG, 69115 Heidelberg (DE)
(72) Erfinder: Neeb, Steffen, 64625 Bensheim (DE); Demir, Suat, 69190 Walldorf (DE); Östreicher, Michael, 69214 Eppelheim (DE); Leonhardt, Holger, 74909 Meckesheim (DE); Maier, Stefan, 69234 Dielheim (DE); März, Ralf, 74918 Angelbachtal (DE); Knöbl, Dominik, 74918 Angelbachtal (DE)

(57) **Zusammenfassung**

Ein erfindungsgemäßes Verfahren zum Überführen von Stapeln flächiger Produkte von einer in ihrer Höhe einstellbaren Förderstrecke zu einer Palette, mit einem Roboterarm (11), wobei der Roboterarm (11) eine Greifeinrichtung (20) umfasst und der Roboterarm (11) die Stapel (6) mit der Greifeinrichtung (20) an einer Aufnahmeposition (30) von der Förderstrecke (2) abhebt und an einer Absetzposition (31) auf die Palette (32) absetzt, zeichnet sich dadurch aus, dass der Roboterarm (11) wenigstens einen Kraftsensor (15) umfasst und dass eine eingestellte Höhenposition (43) der Förderstrecke (2) und/oder eine eingenommene Höhenposition (44) der Palette (32) unter Einsatz des Kraftsensors (15) zur Bestimmung einer Kontaktkraft zur Förderstrecke (2) bzw. zur Palette (32) gemessen wird und/oder dass eine eingestellte oder eingenommene Höhen- oder Horizontalposition eines Anschlags (49) unter Einsatz des Kraftsensors (15) zur Bestimmung einer Kontaktkraft zum Anschlag (49) gemessen wird. Die Erfindung ermöglicht es in vorteilhafter Weise, Stapel übereinanderliegender flacher Produkte kollisionsfrei und fehlerfrei abzusetzen. Die Erfindung kommt z.B. in Verbindung mit Falzmaschinen bzw. deren Auslage zum Einsatz.

## Beschreibung

### Erfindung

Die Erfindung betrifft ein Verfahren zum Überführen von Stapeln flächiger Produkte von einer in ihrer Höhe einstellbaren Förderstrecke zu einer Palette mit den Merkmalen des Oberbegriffs von Anspruch 1.

### Gebiet der Technik

Die Erfindung liegt auf dem technischen Gebiet der grafischen Industrie und dort insbesondere im Bereich des Handhabens (z.B. Greifen, Halten, Bewegen, Drehen, Wenden und/oder Absetzen) von Stapeln aus übereinander liegenden, flexiblen und bevorzugt bedruckten und gefalzten flachen Produkten wie z.B. Falzbogen, bevorzugt aus Papier, Karton, Pappe, Kunststoff oder Verbundmaterial, mit einem Manipulator, insbesondere einem Gelenkarmroboter/Knickarmroboter mit Roboterarm und Greifereinrichtung für die Stapel.

### Stand der Technik

Es ist im Bereich der Druckweiterverarbeitung (Postpress) bereits bekannt, Stapel von flächigen Produkten auf einer (z.B. Rollen-) Förderstrecke zu transportieren, die Stapel mittels eines an einem Roboterarm angeordneten Greifers zu erfassen, von der Förderstrecke abzuheben, zu einer in der Nähe der Förderstrecke befindlichen Palette zu bewegen und dort abzusetzen, z.B. aus der DE102020103398A1 oder aus der DE202019106975U1.

Die DE102020103398A1 offenbart eine Förderstrecke für Stapel übereinanderliegender Druckprodukte und einen Roboter mit einem Roboterarm samt Greifer zum Aufnehmen der Stapel von der Förderstrecke und zum Absetzen der Stapel auf Paletten. Der Roboter kann dabei als industrieller Gelenkarmroboter ausgebildet sein. Es ist in dem Dokument auch offenbart, dass ein am Roboter angeordneter Sensor die Höhe eines aufzubauenden Transportstapels erfassen kann. Der Sensor kann an einer Greifeinrichtung angeordnet sein. Der Sensor kann ein Abstandssensor oder eine Kamera sein. Es ist im Dokument nicht beschrieben, dass die Förderstrecke höhenverstellbar ist; üblicherweise sind solche Förderstrecken aber höhenverstellbar, um sie mit verschieden hoch auslegenden Falzmaschinen verbinden zu können.

Die DE202019106975U1 offenbart ebenfalls eine Förderstrecke für Stapel übereinanderliegender Druckprodukte und ein sogenanntes kollaboratives Robotersystem mit einem Roboterarm samt Greifer zum Aufnehmen der Stapel von der Förderstrecke und zum Absetzen der Stapel auf Paletten.

Die FR3110152B1 offenbart ebenfalls eine Förderstrecke und einen robotergeführten Greiferkopf. Der Greiferkopf umfasst dabei ein vertikal bewegliches oberes Greifelement, welches als Klemmelement aufgeführt ist, und ein horizontal bewegliches unteres Greifelement, welches als ein paar von Zinken ausgeführt ist.

Die DE112019000170B4 offenbart einen Roboterarm für das Absetzen von Werkstücken, wobei der Roboterarm einen Kraftsensor zum Erfassen einer Abnormalität beim Überführen der Werkstücke umfasst.

Die US 11597092B1 offenbart einen Roboterarm mit einem Kraftsensor, welcher dazu eingesetzt wird, die Position und die Orientierung eines Flugobjekts zu erfassen.

Sind die exakten (Höhen-) Positionen einer Förderstrecke und einer Palette beim Robotergestützten Umsetzen von Stapeln übereinanderliegender flacher Produkte von der Förderstrecke zur Palette nicht bekannt, so kann es zu Kollisionen oder Absetzfehlern kommen.

### Technische Aufgabe

Es ist daher eine Aufgabe der vorliegenden Erfindung, eine Verbesserung gegenüber dem Stand der Technik zu schaffen, welche es insbesondere ermöglicht, Stapel übereinanderliegender flacher Produkte kollisionsfrei und fehlerfrei abzusetzen.

### Erfindungsgemäße Lösung der Aufgabe

Diese Aufgabe wird erfindungsgemäß durch ein Verfahren nach Anspruch 1 gelöst.

Vorteilhafte und daher bevorzugte Weiterbildungen der Erfindung ergeben sich aus den Unteransprüchen sowie aus der Beschreibung und den Zeichnungen.

Ein erfindungsgemäßes Verfahren zum Überführen von Stapeln flächiger Produkte von einer in ihrer Höhe einstellbaren Förderstrecke zu einer Palette, mit einem Roboterarm, wobei der Roboterarm eine Greifeinrichtung umfasst und der Roboterarm die Stapel mit der Greifeinrichtung an einer Aufnahmeposition von der Förderstrecke abhebt und an einer Absetzposition auf die Palette absetzt, zeichnet sich dadurch aus, dass der Roboterarm wenigstens einen Kraftsensor umfasst und dass eine eingestellte Höhenposition der Förderstrecke und/oder eine eingenommene Höhenposition der Palette unter Einsatz des Kraftsensors zur Bestimmung einer Kontaktkraft zur Förderstrecke bzw. zur Palette gemessen wird und/oder dass eine eingestellte oder eingenommene Höhen- oder Horizontalposition eines Anschlags (49) unter Einsatz des Kraftsensors (15) zur Bestimmung einer Kontaktkraft zum Anschlag (49) gemessen wird.

### Vorteilhafte Ausbildungen und Wirkungen der Erfindung

Die Erfindung ermöglicht es in vorteilhafter Weise, Stapel übereinanderliegender flacher Produkte kollisionsfrei und fehlerfrei abzusetzen.

Die Erfindung kommt z.B. in Verbindung mit Falzmaschinen bzw. deren Auslage zum Einsatz.

Die Erfindung bietet weiterhin den Vorteil, dass ein Kraftsensor des Roboters verwendet wird und dass daher auf einen weiteren Sensor, z.B. einen Abstandssensor, verzichtet werden kann. Insbesondere beim Einsatz eines sogenannten kollaborativen Roboters ist dies von Vorteil, da solche Roboter üblicherweise bereits über eine meist interne Kraftsensorik verfügen. Die Erfindung bietet daher auch eine kostengünstige Lösung.

Mit der Erfindung können in vorteilhafter Weise die relativen (Höhen-) Positionen einer Förderstrecke, einer Palette oder eines Palettenstapels jeweils zueinander und jeweils zur (Höhen-) Positionen eines Roboterarms bzw. einer Greifeinrichtung am Roboterarm erfasst, verarbeitet und für die spätere Bewegung des Roboterarms gespeichert werden.

Sofern technisch erforderlich kann erfindungsgemäß ein Anschlag vorgesehen sein. Der Anschlag kann an der Förderstrecke oder an einer anderen Vorrichtung angeordnet sein, deren Position (in der Horizontalen und/oder in der Vertikalen) für die Roboterbewegungen beim Durchführen des Verfahrens zum Überführen von Stapeln flächiger Produkte relevant ist, z.B. an einem Behälter für (Palettenstapel-) Zwischenlagen oder an einer Wand bei der Palette, an welcher die Stapel beim Absetzen ausgerichtet werden können.

Das Verfahren kann in vorteilhafter Weise dazu genutzt werden, im Rahmen eines Einlernprogramms für den Roboter die Positionen der Förderstrecke und der Palette (oder des Palettenstapels oder der Winkellage der Palette) zu bestimmen und für spätere kollisionsfreie Bewegungen des Roboters beim Umsetzen der Stapel, d. h. beim Aufnehmen und Absetzen der Stapel, abzuspeichern. Ein solches ein Einlernprogramm kann bei jedem neuen Umsetz-Vorgang automatisch oder auf Veranlassung des Bedienpersonals gestartet werden, insbesondere dann, wenn neu positionierte Paletten beladen werden oder wenn der Roboter bei einer anderen Förderstrecke eingesetzt wird.

Die Erfindung nutzt demnach den Roboterarm samt dessen Kraftsensorik als Messinstrument zu Messen von Höhenposition.

### Weiterbildungen der Erfindung

Im Folgenden werden bevorzugte Weiterbildungen der Erfindung (kurz: Weiterbildungen) beschrieben. Diese können - wo es sich nicht technisch ausschließt - auch untereinander kombiniert werden.

Eine Weiterbildung kann sich dadurch auszeichnen, dass die Greifeinrichtung in eine vorgegebene Ausgangsposition in Höhe z=Z0 auf einer Hochachse, d.h. auf einer vertikalen Koordinatenachse z, bewegt wird. Bevorzugt ist die Ausgangsposition oberhalb der Förderstrecke bzw. der Palette.

Eine Weiterbildung kann sich dadurch auszeichnen, dass die Greifeinrichtung aus der vorgegebenen Ausgangsposition so weit in oder gegen z-Richtung bewegt wird, bis die Greifeinrichtung die Förderstrecke oder die Palette berührt. Die Berührung erfolgt dabei bevorzugt derart, dass weder der Roboter (-arm) noch die Förderstrecke bzw. die Palette oder ein Palettenstapel beschädigt werden; auch soll die Förderstrecke bzw. die Palette oder der Palettenstapel bei der Berührung nicht verschoben werden. Eine Weiterbildung kann sich dadurch auszeichnen, dass ein Soll-Kraftwert vorgegeben wird und dass die Greifeinrichtung aus der vorgegebenen Ausgangsposition so weit in oder gegen z-Richtung bewegt wird, bis ein vom Kraftsensor gemessener Ist-Kraftwert mit dem Soll-Kraftwert übereinstimmt oder diesen übersteigt. Hierbei kann ein bevorzugt digitaler Rechner zum Einsatz kommen. Eine Weiterbildung kann sich dadurch auszeichnen, dass die Bewegung der Greifeinrichtung gestoppt wird, sobald der vom Kraftsensor gemessene Ist-Kraftwert mit dem Soll-Kraftwert übereinstimmt oder diesen übersteigt. Dabei kann der Rechner die Robotersteuerung zur Ausführung einer entsprechenden Bewegung veranlassen. Eine Weiterbildung kann sich dadurch auszeichnen, dass sich die Greifeinrichtung beim Stopp in einer Endposition befindet.

Eine Weiterbildung kann sich dadurch auszeichnen, dass die Endposition bei der Bestimmung der Höhenposition der Förderstrecke auf der Hochachse um einen Wert Delta_Z1 von Z0 entfernt liegt. Eine Weiterbildung kann sich dadurch auszeichnen, dass der Wert Delta_Z1 von einer Einrichtung zur Positionsbestimmung des Roboterarms bereitgestellt wird. Eine Weiterbildung kann sich dadurch auszeichnen, dass die Endposition bei der Bestimmung der Höhenposition der Palette auf der Hochachse um einen Wert Delta_Z2 von Z0 entfernt liegt. Eine Weiterbildung kann sich dadurch auszeichnen, dass der Wert Delta_Z2 von einer Einrichtung zur Positionsbestimmung der des Roboterarms bereitgestellt wird. Die Einrichtung zur Positionsbestimmung kann den Kraftsensor und eine bevorzugt digitale Recheneinheit umfassen.

Eine Weiterbildung kann sich dadurch auszeichnen, dass die Greifeinrichtung bei der Bestimmung der eingestellten Höhenposition der Förderstrecke und/oder der eingenommenen Höhenposition der Palette nach unten bewegt wird. Eine Weiterbildung kann sich dadurch auszeichnen, dass die Greifeinrichtung vertikal nach unten bewegt wird. Eine Weiterbildung kann sich dadurch auszeichnen, dass die Greifeinrichtung eine Linearbewegung ausführt.

Eine Weiterbildung kann sich dadurch auszeichnen, dass die Höhenposition Z1 der Förderstrecke rechentechnisch bestimmt wird: Z1=Z0-Delta_Z1. Eine Weiterbildung kann sich dadurch auszeichnen, dass die Höhenposition Z1 beim Bewegen der Greifereinrichtung in die Aufnahmeposition beim Abheben der Stapel berücksichtigt wird. In Kenntnis der Höhenposition Z1 kann die Greifeinrichtung z.B. in eine vorgegebene Position oberhalb der Höhenposition Z1 bewegt werden.

Eine Weiterbildung kann sich dadurch auszeichnen, dass die Höhenposition Z2 der Palette rechentechnisch bestimmt wird: Z2=Z0-Delta_Z2. Eine Weiterbildung kann sich dadurch auszeichnen, dass die Höhenposition Z2 beim Bewegen der Greifereinrichtung in die Absetzposition beim Absetzen der Stapel berücksichtigt wird. In Kenntnis der Höhenposition Z1 kann die Greifeinrichtung z.B. in eine vorgegebene Position oberhalb der Höhenposition Z2 bewegt werden.

Eine Weiterbildung kann sich dadurch auszeichnen, dass eine Winkellage der Palette bestimmt wird, indem drei Höhenpositionen Z2a, Z2b und Z2c an drei voneinander verschiedenen Positionen der Palette gemessen werden. Dabei kann jede einzelne Messung der drei Höhenpositionen nach dem erfindungsgemäßen Verfahren und seinen Weiterbildungen erfolgen.

Eine Weiterbildung kann sich dadurch auszeichnen, dass eine Höhenposition Z3 eines bereits gebildeten Palettenstapels auf der Palette an wenigstens einer Position des Palettenstapels gemessen wird. Dabei kann die Messung der Höhenposition nach dem erfindungsgemäßen Verfahren und seinen Weiterbildungen erfolgen.

Eine Weiterbildung kann sich dadurch auszeichnen, dass der Ursprung (z=0) der Hochachse auf der Höhe eines Boden definiert ist, auf welchem die Förderstrecke und der Roboter positioniert sind.

Eine Weiterbildung kann sich dadurch auszeichnen, dass der Roboter ein Roboter eines kollaborativen Robotersystems ist und dass der Kraftsensor ein im Innern des Roboterarms angeordneter Kraftsensor zur Bereitstellung kollaborativer Funktionen ist. Eine Weiterbildung kann sich dadurch auszeichnen, dass mehrere Kraftsensoren angeordnet sind. Der Roboterarm ist bevorzugt Teil eines Robotersystems, welches meist auch eine Roboterbasis umfasst und welches als ein üblicher Industrieroboter samt Einzäunung zum Bedienerschutz, insbesondere als Gelenkarmroboter mit drei bis sieben Rotationsachsen, oder als ein sogenanntes kollaboratives Robotersystem, insbesondere als ein sogenannter Cobot, ausgebildet sein kann. Letzteres benötigt keine Einzäunung, da das System über eine eigene Sensorik verfügt und mittels dieser Berührungen mit Bedienpersonal erfasst und mögliche Verletzungen z.B. durch einen automatischen Stopp der Roboterarmbewegung verhindert. Ein kollaboratives Robotersystem kann alternativ zum Cobot auch durch einen Industrieroboter mit zusätzlichem Bereichsscanner (Erfassung von Bedienpersonal im Gefahrenbereich) und mit einer Stoppautomatik verwirklicht werden.

Eine Weiterbildung kann sich dadurch auszeichnen, dass der Roboterarm als Gelenkarm ausgebildet ist.

Die in den obigen Abschnitten Technisches Gebiet, Erfindung und Weiterbildungen sowie im folgenden Abschnitt Ausführungsbeispiele offenbarten Merkmale und Merkmalskombinationen stellen - in beliebiger Kombination miteinander - weitere vorteilhafte Weiterbildungen der Erfindung dar.

### Ausführungsbeispiele zur Erfindung und Figuren

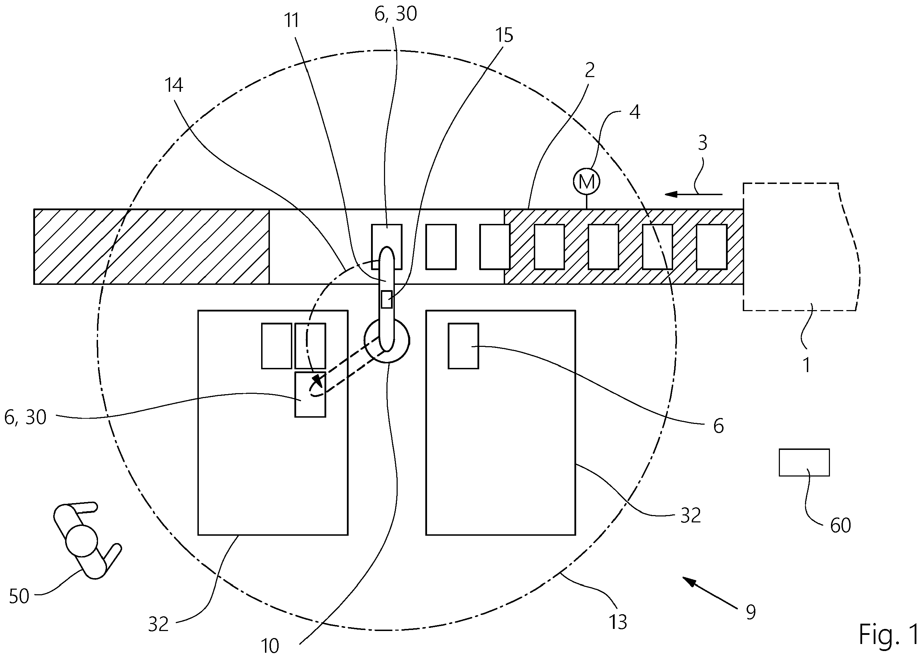

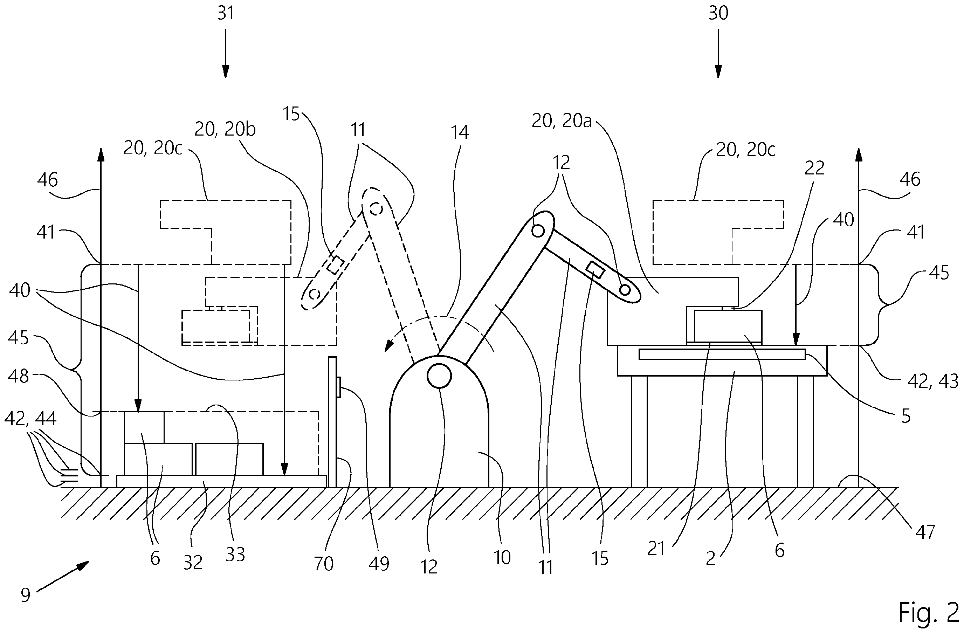

Die Figuren 1 und 2 zeigen bevorzugte Ausführungsbeispiele der Erfindung und der Weiterbildungen. Einander entsprechende Merkmale sind in den Figuren mit denselben Bezugszeichen versehen. Sich in den Figuren wiederholende Bezugszeichen wurden der Übersichtlichkeit teils weggelassen.

Figur 1 zeigt eine schematische Darstellung einer Draufsicht einer Vorrichtung bei der Durchführung eines bevorzugten Ausführungsbeispiels eines erfindungsgemäßen Verfahrens.

Figur 2 zeigt eine schematische Darstellung einer Seitenansicht einer Vorrichtung bei der Durchführung eines bevorzugten Ausführungsbeispiels eines erfindungsgemäßen Verfahrens.

Figur 1 zeigt ausschnittsweise eine Maschine 1 der grafischen Industrie, bevorzugt eine Weiterverarbeitungsmaschine 1 und insbesondere eine Falzmaschine 1, und eine der Maschine nachgeordnete, bevorzugt lineare Förderstrecke 2, z.B. ein Rollentisch 2 mit Transportrollen 5, mit einer Förderrichtung 3 und mit einem Motor 4 zum bevorzugt horizontalen Fördern von aufeinanderfolgenden Stapeln 6 übereinanderliegender Produkte, z.B. bedruckter und gefalzter Papierbogen 6.

Weiterhin zeigt Figur 1 eine erfindungsgemäße Vorrichtung 9 zum Umsetzen der Stapel 6, insbesondere zum Absetzen der Stapel 6 auf Paletten 32. Die Vorrichtung 9 umfasst einen Roboter 10 mit einem beweglichen Roboterarm 11, z.B. einem Gelenkarm 11, an welchem ein Greifwerkzeug 20 zum Ergreifen einzelner Stapel 6 angeordnet ist. Ein Gefahrenbereich 13 ist durch die maximalen Bewegungen des Roboterarms 11 definiert. Das Greifwerkzeug 20 ergreift jeweils einen Stapel 6, hebt diesen von der Förderstrecke 2 ab und hält den Stapel 6 während der Roboterbewegung zu einer Palette 32. Die von der Maschine 1 weggeförderten Stapel 6 werden auf diese Weise nacheinander auf der Palette 32 abgesetzt und bilden dort (nebeneinander und übereinander entsprechend einem vorgegebenen Absetzschema angeordnet) einen Palettenstapel 33. Die Stapel 6 einer oberen (und bevorzugt vollständigen) Ebene bilden eine Oberkante des Palettenstapels 33. In Figur 1 sind beispielhaft zwei Paletten 32 an einer Längsseite der Förderstrecke 2 platziert. Auch der Roboter 10 ist beispielhaft an der Längsseite der Förderstrecke 2 platziert; er könnte alternativ auch am Ende der Förderstrecke 2 angeordnet sein. Mittels des Roboters 10 können die beiden Paletten 32 nacheinander mit Stapeln 6 beladen werden; alternativ können die beiden Paletten 32 auch abwechselnd beladen werden. Es ist eine Steuereinrichtung 60 vorhanden, welche die Bewegungen des Roboters beim Umsetzen der Stapel steuert.

Figur 2 zeigt die Vorrichtung 9 in Aktion. Der Roboterarm 11 des Roboters 10 führt dabei wiederholt eine Absetz-Bewegung 14 aus. Eine am Roboterarm 11 endständig angeordnete Greifeinrichtung 20, bzw. ein sogenannter Greiferkopf 20, mit einem unteren Greifer 21 und einem oberen Greifer 22 erfasst die Stapel 6 in der Aufnahmeposition 30 (beispielhaft rechts in der Darstellung) und bewegt diese in die Absetzposition 31 (beispielhaft links in der Darstellung). Beim Aufnehmen befindet sich der Greiferkopf 20 in einer Position 20a nahe bei der Förderstrecke 2 und beim Absetzen in einer Position 20b nahe bei der Palette 32. Die abgesetzten einzelnen Stapel 6 bilden auf der Palette 32 sukzessive einen Palettenstapel 33. Der Roboterarm 11 umfasst mehrere Gelenke 12 und ist auf diese Weise frei im Raum beweglich. Weiterhin umfasst der Roboterarm 11 wenigstens einen Sensor 15, welcher als ein Kraftsensor 15, d. h. als ein Kräfte messender Sensor, ausgeführt ist.

Der Roboterarm 11 und somit auch die Greifeinrichtung 20 führen erfindungsgemäß eine (bevorzugt linear und vertikal nach unten verlaufende) jeweilige Messbewegung 40 aus, welche in einer jeweiligen (oberen) Ausgangsposition 41 startet und in einer jeweiligen (unteren) Endposition 42 endet. Die jeweilige Ausgangsposition 41 kann vorgegeben sein und von dem Roboterarm 11 beim Start des Messvorgangs automatisch angefahren werden. Die jeweilige Endposition 42 ist erreicht, wenn der Kraftsensor 15 des Roboterarms 11 anschlägt, d. h. ein vorgegebener Soll-Kraftwert erreicht oder überschritten ist; dies ist bevorzugt dann der Fall, wenn die Greifeinrichtung 20 die Förderstrecke 2, die Palette 32 oder dem Palettenstapel 33 berührt.

Die jeweilige Messbewegung 40 dient dem Messen einer Höhenposition 43 der Förderstrecke 2 (Wert Z1), einer Höhenposition 44 der Palette 32 (Wert Z2) oder einer Höhenposition 48 des Palettenstapels 33 (Wert Z3); oder der Winkellage der Platte im Raum (Wertetriple Z2a, Z2b, Z2c), z.B. relativ zu einer Horizontalen. Die jeweilige Höhenposition Z1, Z2, Z2a, Z2b und/oder Z2c entspricht dann der jeweiligen Endposition 42. Alle (Höhen-) Werte sind als Werte auf einer Z-Achse bzw. Hochachse 46 zu verstehen; der Nullpunkt kann dabei auf dem (Höhen-) Niveau eines Bodens 47 der Produktionsstätte definiert sein.

Figur 2 zeigt auch beispielhaft einen Anschlag 49. Dieser kann z.B. an einer Wand 70 bei der Palette 32 angeordnet sein. Der Roboterarm 11 bzw. die Greifereinrichtung 20 kann zur Ermittlung der Kontaktkraft gegen diesen Anschlag bewegt werden.

### Bezugszeichenliste

- 1: Maschine
- 2: Förderstrecke
- 3: Förderrichtung
- 4: Motor
- 5: Rolle/-n
- 6: Stapel
- 9: Vorrichtung
- 10: Roboter / Robotersystem
- 11: Roboterarm
- 12: Gelenke
- 13: Gefahrenbereich
- 14: (Absetz-) Bewegung
- 15: Sensor, insbesondere Kraftsensor
- 20: Greifeinrichtung, Greiferkopf
- 20a: Greifeinrichtung, Greiferkopf beim Aufnehmen
- 20b: Greifeinrichtung, Greiferkopf beim Absetzen
- 20c: Greifeinrichtung, Greiferkopf in der (Mess-) Ausgangsposition
- 21: (unterer) Greifer
- 22: (oberer) Greifer
- 30: Aufnahmeposition
- 31: Absetzposition
- 32: Palette/-n
- 33: Palettenstapel
- 40: (Mess-) Bewegung
- 41: (Mess-) Ausgangsposition
- 42: (Mess-) Endposition
- 43: Höhenposition(en) der Förderstrecke
- 44: Höhenposition(en) der Palette
- 45: Höhenunterschied
- 46: Z-Achse / Hochachse
- 47: Boden
- 48: Höhenposition(en) des Palettenstapels
- 49: Anschlag
- 50: Bedienperson
- 60: Steuereinrichtung
- 70: Wand

## Patentansprüche

1. Verfahren zum Überführen von Stapeln flächiger Produkte von einer in ihrer Höhe einstellbaren Förderstrecke zu einer Palette, mit einem Roboterarm (11), wobei der Roboterarm (11) eine Greifeinrichtung (20) umfasst und der Roboterarm (11) die Stapel (6) mit der Greifeinrichtung (20) an einer Aufnahmeposition (30) von der Förderstrecke (2) abhebt und an einer Absetzposition (31) auf die Palette (32) absetzt,
**dadurch gekennzeichnet,**
**dass** der Roboterarm (11) wenigstens einen Kraftsensor (15) umfasst und dass eine eingestellte Höhenposition (43) der Förderstrecke (2) und/oder eine eingenommene Höhenposition (44) der Palette (32) unter Einsatz des Kraftsensors (15) zur Bestimmung einer Kontaktkraft zur Förderstrecke (2) bzw. zur Palette (32) gemessen wird und/oder dass eine eingestellte oder eingenommene Höhen- oder Horizontalposition eines Anschlags (49) unter Einsatz des Kraftsensors (15) zur Bestimmung einer Kontaktkraft zum Anschlag (49) gemessen wird.

2. Verfahren nach Anspruch 1,
**dadurch gekennzeichnet,**
**dass** die Greifeinrichtung (20) in eine vorgegebene Ausgangsposition (41) auf einer Hochachse (46), d.h. auf einer vertikalen Koordinatenachse z, bewegt wird.

3. Verfahren nach Anspruch 2,
**dadurch gekennzeichnet,**
**dass** die Greifeinrichtung (20) aus der vorgegebenen Ausgangsposition (41) so weit in oder gegen z-Richtung bewegt wird, bis die Greifeinrichtung (20) die Förderstrecke (2) oder die Palette (32) berührt.

4. Verfahren nach einem der vorhergehenden Ansprüche 2 oder 3,
**dadurch gekennzeichnet,**
**dass** ein Soll-Kraftwert vorgegeben wird und dass die Greifeinrichtung (20) aus der vorgegebenen Ausgangsposition (41) so weit in oder gegen z-Richtung bewegt wird, bis ein vom Kraftsensor (15) gemessener Ist-Kraftwert mit dem Soll-Kraftwert übereinstimmt oder diesen übersteigt.

5. Verfahren nach einem der vorhergehenden Ansprüche,
**dadurch gekennzeichnet,**
**dass** die Bewegung (40) der Greifeinrichtung (20) gestoppt wird, sobald der vom Kraftsensor (15) gemessene Ist-Kraftwert mit dem Soll-Kraftwert übereinstimmt oder diesen übersteigt.

6. Verfahren nach Anspruch 5,
**dadurch gekennzeichnet,**
**dass** sich die Greifeinrichtung (20) beim Stopp in einer Endposition (42) befindet.

7. Verfahren nach einem der vorhergehenden Ansprüche,
**dadurch gekennzeichnet,**
**dass** die Greifeinrichtung (20) bei der Bestimmung der eingestellten Höhenposition (43) der Förderstrecke (2) und/oder der eingenommenen Höhenposition (44) der Palette (32) nach unten bewegt wird.

8. Verfahren nach einem der vorhergehenden Ansprüche,
**dadurch gekennzeichnet,**
**dass** eine Winkellage der Palette (32) bestimmt wird, indem drei Höhenpositionen (44) an drei voneinander verschiedenen Positionen der Palette (32) gemessen werden.

9. Verfahren nach einem der vorhergehenden Ansprüche,
**dadurch gekennzeichnet,**
**dass** eine Höhenposition (48) eines bereits gebildeten Palettenstapels (33) auf der Palette (32) an wenigstens einer Position des Palettenstapels (33) gemessen wird.

10. Verfahren nach einem der vorhergehenden Ansprüche,
**dadurch gekennzeichnet,**
**dass** der Roboter (10) ein Roboter eines kollaborativen Robotersystems (10) ist und
**dass** der Kraftsensor (15) ein im Innern des Roboterarms (11) angeordneter Kraftsensor (15) zur Bereitstellung kollaborativer Funktionen ist.
